# EUROPÄISCHE PATENTSCHRIFT

(11) **EP 0 658 702 B1**
(45) Veröffentlichungstag und Bekanntmachung des Hinweises auf die Patenterteilung: **02.04.1997**
(21) Anmeldenummer: 94117986.3
(22) Anmeldetag: 15.11.1994
(51) Int. Cl.: F16F 9/46, B60G 17/08

(54) **Regelbares Dämpfungsventilsystem für einen Schwingungsdämpfer eines Kraftfahrzeuges**
Variable damping valve system for a vibration damper of a motor vehicle
Système de soupape d'amortissement variable pour un amortisseur de vibrations d'un véhicule automobile

(30) Priorität: 08.12.1993 DE 4341775
(43) Veröffentlichungstag der Anmeldung: 21.06.1995
(73) Patentinhaber: August Bilstein GmbH, 58256 Ennepetal (DE); MERCEDES-BENZ AG, 70327 Stuttgart (DE)
(72) Erfinder: Huang, Zhen, Dr., D-42389 Wuppertal (DE); Schmidt, Klaus, Dipl.-Ing., D-51467 Bergisch Gladbach (DE); Scheerer, Hans, Dipl.-Ing., D-73734 Esslingen (DE); Opara, Andreas, Dipl.-Ing., D-70736 Fellbach (DE)

(56) Entgegenhaltungen:
- DE-A- 3 119 445
- DE-A- 4 216 987
- GB-A- 677 672
- US-A- 4 611 632
- PATENT ABSTRACTS OF JAPAN vol. 17 no. 548 (M-1490) ,4.Oktober 1993 & JP-A-05 149464 (NIPPON M K S) 15.Juni 1993,

## Beschreibung

Die Erfindung betrifft ein regelbares Dämpfungsventilsystem für einen Schwingungsdämpfer eines Kraftfahrzeuges, das zwei Dämpfungsventile aufweist, die aus je einem elektromagnetisch ansteuerbaren, mit mindestens einem Durchlaß zusammenarbeitenden, axial beweglichen Steuerschieber und einem druckabhängigen Ventil für die Zug- und Druckstufe bestehen, koaxial gegeneinander in einem im wesentlichen zylinderförmigen Ventilgehäuse angeordnet und über Strömungskanäle miteinander verbindbar sind.

Ein derartiges Dämpfungsventilgehäuse ist in der DE 42 16 987 A1 beschrieben.Bei dem bekannten Dämpfungsventilsystem werden die koaxial gegeneinander angeordneten Ventile für die Zug- und Druckstufe mit ihren Ventilkörpern von einem ein- oder mehrteilig ausgeführten Bauteil getragen. Für die Fixierung der Ventile gegeneinander sind an den Enden des die Ventile tragenden Bauteils Muttern vorgesehen, wobei eine der Muttern gleichzeitig die Befestigung der Baugruppe an einem Träger übernimmt, der sich an dem Gehäuse eines der Ventilschieber abstützt. Dadurch werden die im Ventilinnenraum entstehenden Kräfte auf die Schiebergehäuse übertragen.

Die Aufgabe der Erfindung ist es, ein Dämpfungsventilsystem zur Regelung der Dämpfungskraft eines Schwingungsdämpfers zu schaffen, bei dem die im Ventilinnenraum enstehenden Kräfte direkt auf das Ventilgehäuse übertragen und die Schiebergehäuse entlastet werden.

Die Aufgabe wird durch die Merkmale des Patentanspruchs 1 gelöst. Vorteilhafte Ausbildungen des erfindungsgemäßen Dämpfungsventilsystem sind in den Unteransprüchen dargestellt.

Erfindungsgemäß ist das ein- oder mehrteilig ausgebildete, die druckabhängigen Ventile tragende Bauteil mit seinen Enden lösbar oder nicht lösbar in einer zentralen Bohrung der Polkerne der die Ventilschieber ansteuernden Elektromagnete befestigt.

Nach einer vorteilhaften Ausbildung sind die Enden des Bauteils über eine Schraubverbindung in der zentralen Bohrung der Polkerne fixiert.

Eine weitere Ausführung des Dämpfungsventilsystems sieht vor, daß die Enden des die druckabhängigen Ventile tragenden Bauteils durch die zentrale Bohrung der Polkerne hindurchgeführt und außerhalb des Dämpfungsventilsystems fixiert sind.

Der Vorteil der Erfindung liegt insbesondere neben der direkten Übertragung der Dämpfungskräfte aus dem Ventilinnenraum auf das Ventilgehäuse in einer einfacheren Montage des Dämpfungsventilsystems.

Nachfolgend wird die Erfindung anhand mehrerer Ausführungsbeispiele näher beschrieben. Die zugehörigen Zeichnungen zeigen:
- Fig. 1: eine Darstellung des Dämpfungsventilsystems, bei dem die druckabhängigen Ventile in Reihe zu den ansteuerbaren Ventilen geschaltet sind und
- Fig. 2: eine Darstellung des Dämpfungsventilsystems, bei dem die druckabhängigen Ventile parallel zu den ansteuerbaren Ventilen geschaltet sind.

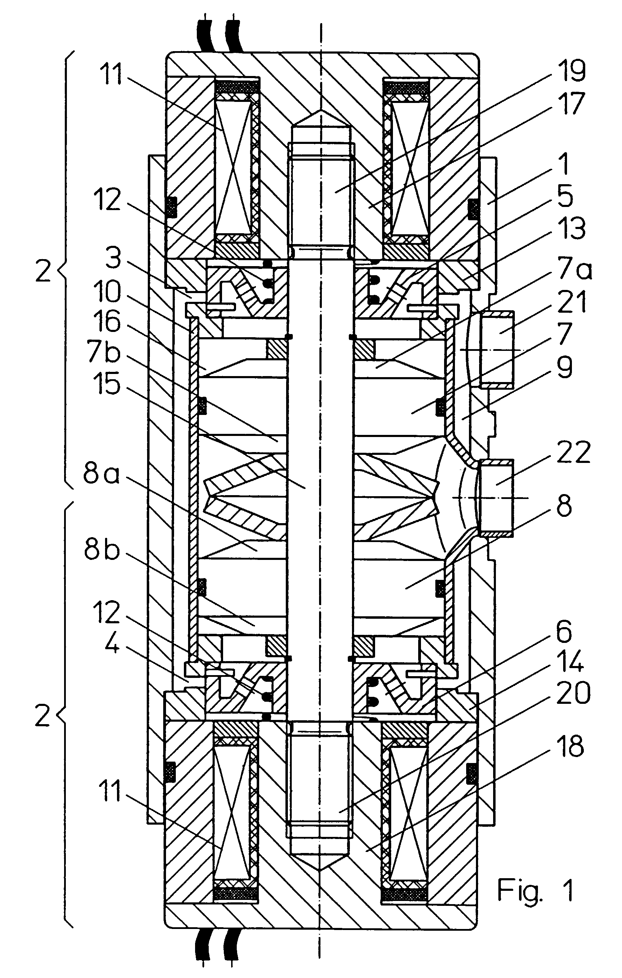

Das in Fig.1 dargestellte Dämpfungsventilsystem besteht aus einem zylinderförmigen Ventilgehäuse 1, in dem zwei Dämpfungsventile 2 koaxial gegeneinander angeordnet sind. Jedes der Dämpfungsventile 2 weist einen elektromagnetisch ansteuerbaren, mit einem Durchlaß 3,4 zusammenarbeitenden, in einem Schiebergehäuse 13,14 angeordneten Ventilschieber 5,6 und ein druckabhängiges Ventil 7,8 auf, wobei jedes der druckabhängigen Ventile aus zwei in entgegengesetzter Strömungsrichtung wirkenden Federscheibenventilen 7a,7b,8a,8b besteht, die in Abhängigkeit des Dämpfungsflüssigkeitsdruckes mehr oder weniger öffnen. Die Ventilschieber 5,6 werden jeweils über einen Elektromagneten 11 bewegt und sind durch eine Feder 12 in ihre Schließlage vorgespannt.

Der Strömungskanal 9 zwischen den von den Ventilschiebern 5,6 verstellbaren Durchlässen 3,4 verläuft zwischen der Außenwandung eines im Ventilgehäuse 1 angeordneten Rohres 10 und der Innenwandung des Ventilgehäuses 1, wobei das Rohr 10 gleichzeitig mit den die Ventilschieber 5,6 aufnehmenden Schiebergehäusen 13,14 den Ventilinnenraum 16 bildet. Der Ventilinnenraum nimmt die druckabhängigen Ventile 7,8 auf, die zur Fixierung im Ventilgehäuse 1 von dem Bauteil 15 getragen werden, dessen Enden 19,20 bei diesem Ausführungsbeispiel ein Außengewinde aufweisen und in in eine zentrale Bohrung der Polkerne 17,18 der Elektromagneten 11 eingeschraubt sind. Entsprechend sind die aus magnetisierbaren Material bestehenden Ventilschieber 5,6 ringförmig ausgebildet. Die Schiebergehäuse 13,14 bestehen für die Ausbildung des Magnetkreises aus nichtmagnetisierbaren Material.

Die Strömungsanschlüsse 21,22 des Dämpfungsventilsystems nach außen auf den Schwingungsdämpfer bzw. die Niveauregelanlage sind radial am Ventilgehäuse 1 derart angeordnet, daß der Strömungsanschluß 21 eine Verbindung zum Strömungskanal 9 und der Strömungsanschluß 22 eine Verbindung axial zwischen den druckabhängigen Ventilen 7,8 zum Ventilinnenraum 16 aufweist. Durch diese Anordnung der Strömungsanschlüsse wird eine Reihenschaltung von druckabhängigen Ventilen 7,8 und ansteuerbaren Ventilschiebern 5,6 erreicht.

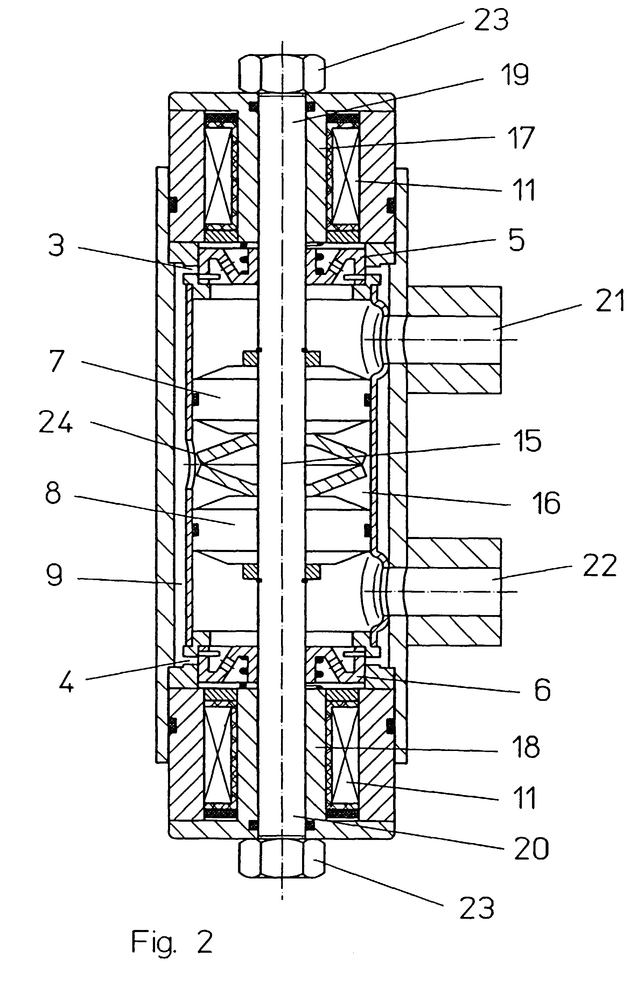

Bei dem Dämpfungsventilsystem nach Fig. 2 weisen die Polkerne 17,18 der Elektromagneten 11 eine durchgehende zentrale Bohrung auf, durch die die Enden 19,20 des die druckabhängigen Ventile 7,8 tragenden Bauteils 15 geführt und mit einer äußeren Mutter 23 am Elektromagneten 11 fixiert sind.

Die Strömungsanschlüsse 21,22 sind bei diesem Ausführungsbeispiel in den Ventilinnenraum 16 geführt und weisen eine direkte Verbindung zu dem jeweiligen druckabhängigen Ventil 7,8 und dem entsprechenden durch die Ventilschieber 5,6 gesteuerten Durchlaß 3,4 auf.Um eine strömungstechnische Parallelschaltung der ansteuerbaren Ventilschieber 5,6 und der druckabhängigen Ventile 7,8 zu realisieren, ist desweiteren ein Durchlaß 24 vom Ventilinnenraum 16 zu dem die Durchlässe 3 und 4 miteinander verbindenden Strömungskanal 9 vorgesehen.

### Bezugszeichenliste

- 1: Ventilgehäuse
- 2: Dämpfungsventile
- 3: Durchlaß
- 4: Durchlaß
- 5: Ventilschieber
- 6: Ventilschieber
- 7: druckabhängiges Ventil
- 8: druckabhängiges Ventil
- 9: Strömungskanal
- 10: Rohr
- 11: Elektromagneten
- 12: Feder
- 13: Schiebergehäuse
- 14: Schiebergehäuse
- 15: Bauteil
- 16: Ventilinnenraum
- 17: Polkern
- 18: Polkern
- 19: Ende
- 20: Ende
- 21: Strömungsanschluß
- 22: Strömungsanschluß
- 23: Mutter
- 24: Durchlaß

## Patentansprüche

1. Regelbares Dämpfungsventilsystem für einen Schwingungsdämpfer eines Kraftfahrzeuges,das zwei Dämpfungsventile (2) aufweist, die aus je einem elektromagnetisch ansteuerbaren, mit mindestens einem Durchlaß (21,22) zusammenarbeitenden, axial beweglichen Steuerschieber (5,6) und einem druckabhängigen Ventil (7,8) für Zug- und Druckstufe bestehen, koaxial gegeneinander, in einem im wesentlichen zylinderförmigen Ventilgehäuse (1) angeordnet und über Strömungskanäle (9) miteinander verbindbar sind, dadurch gekennzeichnet, daß das ein-oder mehrteilig ausgebildete, die druckabhängigen Ventile (7;8) tragende Bauteil (15) mit seinen Enden lösbar oder nichtlösbar in einer zentralen Bohrung der Polkerne (17;18) der die Ventilschieber (5;6) ansteuernden Elektromagnete (11) befestigt ist.

2. Dämpfungsventilsystem nach Anspruch 1, dadurch gekennzeichnet, daß die Enden (19;20) des Bauteils (15) in die Polkerne (17;18) eingeschraubt sind.

3. Dämpfungsventilsystem nach Anspruch 1, dadurch gekennzeichnet, daß die Enden (19;20) des Bauteils (15) durch die zentrale Bohrung der Polkerne (17;18) hindurchgeführt und über eine Schraubverbindung fixiert sind.

4. Dämpfungsventilsystem nach einem der Ansprüche 1 bis 3, dadurch gekennzeichnet, daß die Ventilschieber (5;6) kreisringförmig ausgebildet und um das Bauteil (15) angordnet sind .

5. Dämpfungsventilsystem nach Anspruch 4, dadurch gekennzeichnet, daß das die Ventilschieber(5;6) aufnehmende Ventilgehäuse (1) aus nicht magnetisierbaren Material besteht.

## Claims

1. Adjustable damping valve system for a vibration damper of a motor vehicle, which comprises two damping valves (2) which each consist of an axially displaceable control slide (5, 6), which can be actuated electromagnetically and cooperates with at least one through opening (21, 22), and a pressure-dependent valve (7, 8) for pulling and pushing stages, are disposed coaxially to each other in a substantially cylindrical valve housing (1) and can be connected to each other by way of flow channels (9),
characterised in that the component (15) which is formed in one or a plurality of parts and carries the pressure-dependent valves (7; 8) is fixed with its ends in a releasable or non-releasable manner in a central bore of the pole cores (17; 18) of the electromagnets (11) actuating the valve slides (5; 6).

2. Damping valve system according to claim 1,
characterised in that the ends (19; 20) of the component (15) are screwed into the pole cores (17; 18).

3. Damping valve system according to claim 1,
characterised in that the ends (19; 20) of the component (15) are passed through the central bore of the pole cores (17; 18) and fixed by a screw connection.

4. Damping valve system according to one of claims 1 to 3,
characterised in that the valve slides (5; 6) are formed as a circular ring and disposed around the component (15).

5. Damping valve system according to claim 4,
characterised in that the valve housing receiving the valve slides (5; 6) consists of non-magnetisable material.

## Revendications

1. Système de soupape d'amortissement régulable pour un amortisseur d'un véhicule à moteur, qui présente deux soupapes d'amortissement (2) qui sont chacune constituées d'un tiroir de commande (5, 6) mobile axialement, commandé électromagnétiquement, coopérant avec au moins un passage (21, 22), et d'un clapet (7, 8) sensible à la pression, pour la course de traction et la course de compression, coaxiales l'une par rapport à l'autre, disposées chacune dans un boîtier de soupape (1) de forme essentiellement cylindrique et pouvant être reliées l'une à l'autre par des canaux d'écoulement (9), caractérisé en ce que le composant (15) configuré en une ou plusieurs pièces, portant les clapets (7, 8) sensibles à la pression, est fixé de manière libérable ou non libérable par ses extrémités dans un alésage central des noyaux polaires (17, 18) des électroaimants (11) commandant les tiroirs de soupape (5, 6).

2. Système de soupape d'amortissement selon la revendication 1, caractérisé en ce que les extrémités (19, 20) du composant (15) sont vissées dans les noyaux polaires (17, 18).

3. Système de soupape d'amortissement selon la revendication 1, caractérisé en ce que les extrémités (19, 20) du composant (15) traversent l'alésage central des noyaux polaires (17, 18) et sont fixés par une liaison vissée.

4. Système de soupape d'amortissement selon l'une des revendications 1 à 3, caractérisé en ce que les tiroirs de soupape (5, 6) sont configurés en forme d'anneaux circulaires et sont disposés autour du composant (15).

5. Système de soupape d'amortissement selon la revendication 4, caractérisé en ce que les boîtiers de soupapes (1) recevant les tiroirs de soupape (5, 6) sont constitués d'un matériau non magnétisable.
